(19) Europäisches Patentamt / European Patent Office / Office européen des brevets

(11) **EP 4 786 933 A1**

(12) **EUROPEAN PATENT APPLICATION**

(43) Date of publication:
**05.08.2026 Bulletin 2026/32**

(21) Application number: **25315032.0**

(22) Date of filing: **04.02.2025**

(51) International Patent Classification (IPC):
***G01H 9/00*** *(2006.01)*

(52) Cooperative Patent Classification (CPC):
**G01H 9/004**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Alcatel Submarine Networks
91940 Les Ulis (FR)**

(72) Inventors:
• **Ronnekleiv, Erlend
7052 Trondheim (NO)**
• **Waagaard, Ole Henrik
7025 Trondheim (NO)**

(74) Representative: **Loyer & Abello
9, rue Anatole de la Forge
75017 Paris (FR)**

(54) **APPARATUS AND METHOD FOR DISTRIBUTED ACOUSTIC SENSING**

(57)    An apparatus for distributed acoustic sensing, comprising at least one processor, and at least one memory storing instructions that, when executed by the at least one processor, cause the apparatus to: perform a plurality of distributed acoustic sensing, DAS, measurements by applying a plurality of optical interrogation signals to an optical waveguide and receiving a respective plurality of backscattered response signals from the optical waveguide in response to the plurality of interrogation signals, the response signals having delay-resolved spectra comprising delay-resolved spectral features of the optical waveguide, wherein at least some of the delay-resolved spectral features are shifted in frequency, wherein at least two of the response signals comprise a same part of the delay-resolved spectral features, and determine, based on the plurality of response signals, an aggregated response of the optical waveguide.

**Fig. 2**

**Description**

**Field of the Disclosure**

The disclosure relates to an apparatus and to a method for distributed acoustic sensing.

**Background**

Distributed acoustic sensing (DAS) is an optical sensing technology that uses optical fibers as sensors, e.g., to detect vibrations. By analyzing a backscatter of light pulses sent through the optical fiber, a DAS system can detect and identify physical changes in an environment of an optical fiber, changes that may be caused by sound or by pressure, strain, or temperature variations along the fiber.

**Summary**

According to a first aspect of the disclosure, an apparatus for distributed acoustic sensing comprises at least one processor, and at least one memory storing instructions that, when executed by the at least one processor, cause the apparatus to: perform a plurality of distributed acoustic sensing, DAS, measurements by applying a plurality of optical interrogation signals to an optical waveguide and receiving a respective plurality of backscattered response signals from the optical waveguide in response to the plurality of interrogation signals, the response signals having delay-resolved spectra comprising delay-resolved spectral features of the optical waveguide, wherein at least some of the delay-resolved spectral features are shifted in frequency, wherein at least two of the response signals comprise a same part of the delay-resolved spectral features, and determine, based on the plurality of response signals, an aggregated response of the optical waveguide. In some examples, this enables to provide a broadband response of the optical waveguide that may, e.g., be used as a reference, e.g., for future DAS measurements.

In this disclosure, a characteristic of a frequency spectrum of a signal is referred to as a spectral feature. Each spectral feature of the delay-resolved spectra of the response signals may be: a) a characteristic pattern, or b) a signature, or c) a "fingerprint" (see examples provided further below) of the optical waveguide.

In this application, the term "delay" (or the Greek letter tau, T) generally means the time axis of the optical impulse response of the waveguide that is being interrogated using probe light. In a slightly broader sense, the term "delay" may also be used to refer to the time axis of the response received after a frequency swept pulse was transmitted.

In this application, the term "delay-resolved spectrum" refers to a signal representation that is a function of both frequency and delay. A delay-resolved spectrum may be obtained by dividing the delay axis into time sections and calculating or measuring the spectrum of the response in each time section. A short-time Fourier transform, STFT (see https://en.wikipedia.org/wiki/Short-time_Fourier_transform, for example) is an example of a delay-resolved spectrum. The STFT may be obtained by dividing the delay axis into sections and calculating or measuring the spectrum of the response in each section. The time sections may be overlapping, and the signals may be apodized within each time section before calculating a spectrum. A two-dimensional representation of the signal, with one time axis and one frequency axis, is thus obtained. While the concept of an STFT is often presented as a calculation method, it is also a framework for representing a signal as a function of time or delay. Such representation is referred to as an STFT map of the signal. The STFT representation usually comprises both phase and magnitude information about the signal, e.g. by using complex numbers.

In some examples, the shift in frequency of one or more delay-resolved spectral features refers to a frequency shift of the spectral features relative to a center frequency of the interrogation signal, e.g., a frequency shift relative to a frequency band interrogated by the respective optical interrogation signals. In some examples, the shift in frequency of the delay-resolved spectral features may be caused by at least one of: a) a shift in a source frequency (e.g., by applying the plurality of optical interrogation signals with different respective center frequencies), or b) a detuning of the optical waveguide, or c) a combination of aspects a) and b).

In some examples, a spectral detuning of the optical response of the optical waveguide may vary with a delay, which is also expressed above by defining that the spectral features are delay-resolved spectral features.

In some examples, the aggregated response has a higher spatial resolution (e.g., larger bandwidth) than the individual responses.

In some examples, the instructions, when executed by the at least one processor, cause the apparatus to: apply a periodic optical interrogation signal having a predetermined interrogation bandwidth and a predetermined interrogation period to the optical waveguide.

In some examples, the instructions, when executed by the at least one processor, cause the apparatus to perform at least one of: a) modifying, e.g., scanning, a center frequency of the periodic optical interrogation signal such that frequency spectra of the optical interrogation signal in subsequent interrogation periods overlap, or b) wait for at least one environmental perturbation associated with the optical waveguide to vary a frequency detuning of at least one back-scattered response signal, such that the spectra of the interrogation signal in subsequent interrogation periods overlap.

In some examples, the instructions, when executed by the at least one processor, cause the apparatus to: receive, for at least two, e.g., subsequent, interrogation periods, a respective backscattered response signal.

In some examples, the instructions, when executed by the at least one processor, cause the apparatus to: determine at least two complex impulse responses (e.g., as opposed to pure magnitude or pure phase responses) of the optical waveguide based on at least two response signals of the plurality of response signals, demodulate the at least two complex impulse responses to obtain respective estimates for a delay-resolved detuning associated with the complex impulse responses, determine adjusted response signals based on the at least two response signals and based on the estimates for the delay-resolved detuning.

In some examples, the instructions, when executed by the at least one processor, cause the apparatus to: combine the adjusted response signals to obtain the aggregated response.

In some examples, the instructions, when executed by the at least one processor, cause the apparatus to: store the aggregated response, e.g., for future evaluation. In some examples, the aggregated response may, e.g., be used as a reference broadband response of the optical waveguide, e.g., for comparison with at least one further aggregated response that may be obtained for the same optical waveguide, e.g., at another point in time.

In some examples, the instructions, when executed by the at least one processor, cause the apparatus to: determine a further aggregated response of the optical waveguide, compare the further aggregated response of the optical waveguide with the aggregated response of the optical waveguide.

In some examples, the instructions, when executed by the at least one processor, cause the apparatus to apply to the optical waveguide a sequence of N many modulated optical interrogation signals $\exp(i2\pi v_k t)M(t)$, wherein $v_k$, k = 1 ... N characterizes a center frequency of a k-th modulated optical interrogation signal, wherein $M(t)$ is a pulse modulation function implementing a modulation pulse with a or the predetermined interrogation bandwidth SBW, by scanning the center frequency $v_k$ of the sequence of the modulated optical interrogation signals over a predetermined scanning bandwidth BW, wherein $v_k - v_{k-1} <$ SBW. In some examples, the criterion $v_k - v_{k-1} <$ SBW ensures a suitable overlap of the frequency spectra the respective interrogation signals.

In some examples, the instructions, when executed by the at least one processor, cause the apparatus to perform, for each of the N many modulated optical interrogation signals, at least one of the following aspects: a) receiving a backscattered interrogation signal $S_k(\tau)$, where $\tau$ characterizes a delay since a start of a transmitted modulation pulse, or b) applying a matched filter to a or the backscattered interrogation signal $S_k(\tau)$ (e.g., by correlation with the pulse modulation function $M(-t)$), to extract an estimate for a delay-resolved fiber response $h_k(\tau)$, or c) extracting a delay-resolved detuning $\Delta d_k(\tau)$ since an interrogation at a previous frequency $v_{k-1}$ based on a signal in the overlapping frequency bands of the backscattered interrogation signal $S_k(\tau)$ and a previous backscattered interrogation signal $S_{k-1}(\tau)$ using a DAS demodulation technique, wherein, for a first iteration, k=1, the delay-resolved detuning $\Delta d_1(\tau) = 0$, or d) determining an aggregated detuning since a start of the sequence as $d_k(\tau) = \sum_{n=1}^{k} \Delta d_k(\tau)$, or e) determining the delay-resolved fiber response $h_k$ ($\tau$) as an adjusted short-time Fourier transform, STFT, map $h_k'(\tau, d)$ with a time resolution $\delta\tau$ characterizing a sampling interval of the delay-resolved fiber response $h_k(\tau)$, where the delay-resolved fiber response $h_k(\tau)$ is shifted by $(v_k - v_0 + d_k(\tau))$ to represent a sample of the response at a start of the sequence relative to an optical reference frequency $v_0$, e.g., in accordance with

$$h_k'(\tau, d) = h_k(\tau) \cdot \exp\left(i2\pi\left(\int_0^\tau d_k(t)\, dt + (v_k - v_0)\tau\right)\right) \cdot \text{interp}((v_k - v_0 + d_k(\tau) - d)$$

$\delta\tau$), wherein d characterizes a discrete detuning axis of the STFT map $h_k'(\tau, d)$, wherein interp(x) characterizes an interpolation function.

In some examples, the instructions, when executed by the at least one processor, cause the apparatus to determine an aggregated STFT map $h(\tau,d)$ by combining the adjusted STFT maps $h_k'(\tau, d)$ using a weighted averaging procedure, e.g. in accordance with $h(\tau, d) = \frac{\sum_{k=1}^{N} h_k'(\tau,d)\, W_k(d)}{\sum_{k=1}^{N} W_k^2(d)}$, where $W_k(d) = A(d) \cdot \text{interp}((v_k - v_0 + d_k$ ($\tau$) - d)$\delta\tau$), wherein $A(d)$ characterizes a power spectral density of the pulse modulation function $M(t)$.

In some examples, performing the plurality of DAS measurements comprises applying the plurality of optical interrogation signals at two different polarizations and receiving the plurality of backscattered response signals at two, e.g., another two, different polarizations.

Some examples relate to an apparatus for distributed acoustic sensing, the apparatus comprising means for: performing a plurality of distributed acoustic sensing, DAS, measurements by applying a plurality of optical interrogation signals to an optical waveguide and receiving a respective plurality of backscattered response signals from the optical waveguide in response to the plurality of interrogation signals, the response signals having delay-resolved spectra comprising delay-resolved spectral features of the optical waveguide, wherein at least some of the delay-resolved spectral features are shifted in frequency, wherein at least two of the response signals comprise a same part of the delay-resolved spectral features, determining, based on the plurality of response signals, an aggregated response of the optical waveguide.

In some examples, the means may, e.g., comprise at least one processor, and at least one memory storing instructions that, when executed by the at least one processor, cause the apparatus to perform at least one of the aspects of the disclosure.

In some other examples, however, the means may, e.g., comprise circuitry for performing at least one of the aspects of the disclosure.

According to a second aspect of the disclosure, a method for distributed acoustic sensing comprises: performing a plurality of distributed acoustic sensing, DAS, measurements by applying a plurality of optical interrogation signals to an optical waveguide and receiving a respective plurality of backscattered response signals from the optical waveguide in response to the plurality of interrogation signals, the response signals having delay-resolved spectra comprising delay-resolved spectral features of the optical waveguide, wherein at least some of the delay-resolved spectral features are shifted in frequency, wherein at least two of the response signals comprise a same part of the delay-resolved spectral features, determining, based on the plurality of response signals, an aggregated response of the optical waveguide.

Some examples relate to a computer program comprising instructions which, when executed by an apparatus, cause the apparatus to perform the method according the disclosure.

Some examples relate to a computer-readable storage medium, for example a non-transitory computer-readable storage medium, comprising the computer program according to the disclosure.

Some examples relate to a data carrier signal carrying and/or characterizing the computer program according to the disclosure.

## Brief Description of the Figures

Fig. 1A          schematically illustrates a DAS apparatus according to some examples,

Fig. 1B          schematically illustrates another DAS apparatus according to some examples,

Fig. 2           schematically illustrates a DAS system according to some examples,

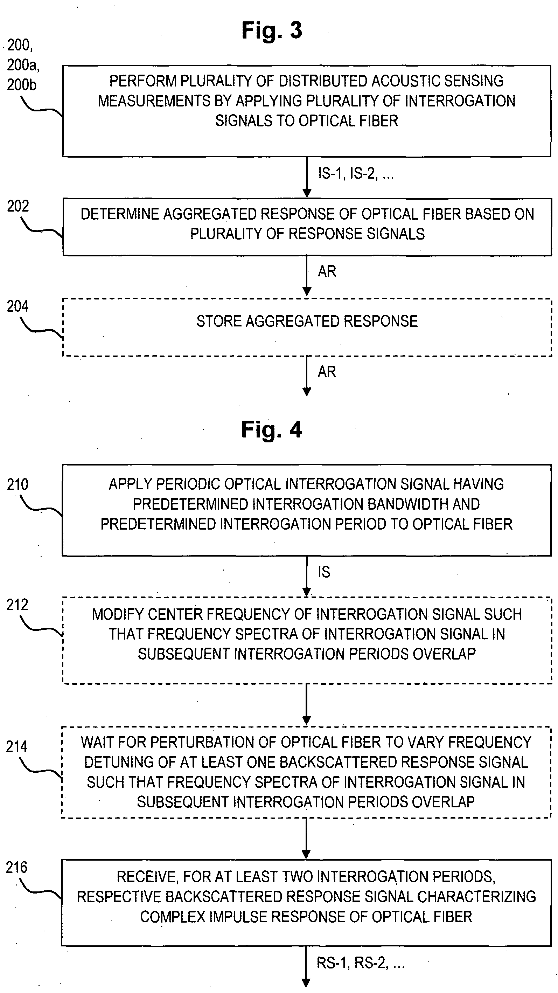

Each of Figs. 3-8    schematically illustrates a DAS method according to some examples,

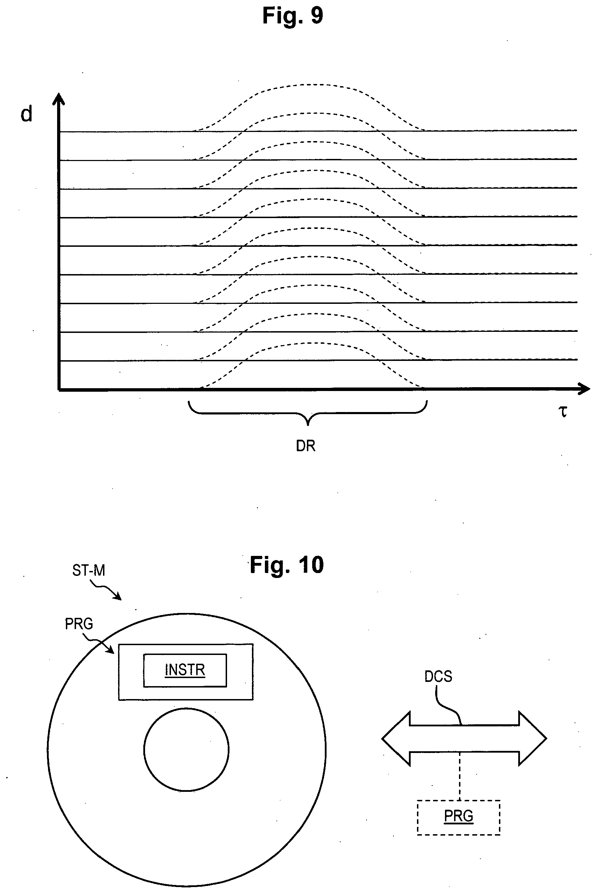

Fig. 9           schematically illustrates aspects of detuning of a backscattered optical signal in a delay-frequency domain according to some examples,

Fig. 10          schematically illustrates a computer program, a computer-readable storage medium, and a data carrier signal, according to some examples.

## Description of some Example Embodiments

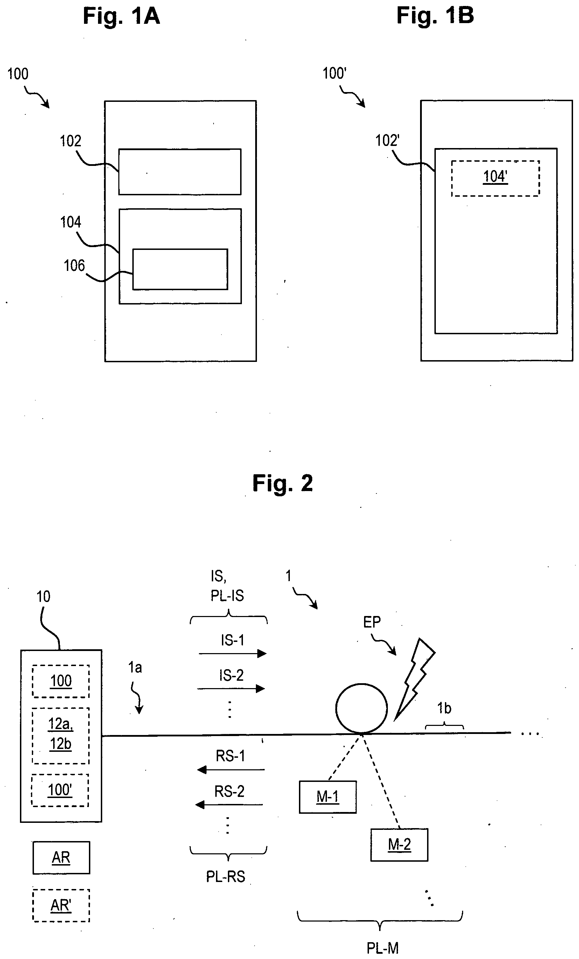

Some example embodiments, see, for example, Fig. 1A, 2, 3, relate to an apparatus 100 for distributed acoustic sensing (DAS). The apparatus 100 comprises at least one processor 102 and at least one memory 104 storing instructions 106 that, when executed by the at least one processor 102, cause the apparatus 100 to: perform 200 a plurality of distributed acoustic sensing, DAS, measurements M-1, M-2, ... by applying a plurality PL-IS of optical interrogation signals IS-1, IS-2, ... to an optical waveguide 1 and receiving a respective plurality PL-RS of backscattered response signals RS-1, RS-2, ... from the optical waveguide 1 in response to the plurality PL-IS of interrogation signals, the response signals RS-1, RS-2, ... having delay-resolved spectra comprising delay-resolved spectral features of the optical waveguide 1, wherein at least some of the delay-resolved spectral features are shifted in frequency, wherein at least two of the response signals RS-1, RS-2 comprise a same part of the delay-resolved spectral features, determine 202, based on the plurality PL-RS of response signals, an aggregated response AR of the optical waveguide 1. In some examples, this enables to provide a broadband response of the optical waveguide 1 that may, e.g., be used as a reference, e.g., for future DAS measurements.

The processor 102 may be a single processor. Alternatively, the processor 102 may comprise a set of processors or processor cores that are interconnected and configured to cooperate. Similarly, the memory 104 may comprise one or more memory modules, located together or apart.

In some examples, a spectral feature may denote at least one of: a) a characteristic pattern, or b) a signature, or c) a part of a "fingerprint" (see examples provided further below) of the optical waveguide 1 that may be characterized by spectral information.

In some examples, the shift in frequency of the delay-resolved spectral features denotes that the spectral features are frequency-shifted relative to a center frequency of the interrogation signal, e.g., such that the spectral features are shifted relative to a band interrogated by the respective optical interrogation signals. In some examples, the shift in frequency of the delay-resolved spectral features may be caused by at least one of: a) a shift in a source frequency (e.g., by applying the plurality of optical interrogation signals IS-1, IS-2, ... with different respective center frequencies), or b) a detuning of the optical waveguide.

In some examples, a spectral detuning of the optical response of the optical waveguide 1 may vary with a delay, which is also expressed above by defining that the spectral features are delay-resolved spectral features.

In some examples, the aggregated response AR has a higher spatial resolution (e.g., larger bandwidth) than the individual responses, e.g., response signals RS-1, RS-2, ....

In some examples, the plurality of optical interrogation signals IS-1, IS-2, ... may comprise a same signal shape and bandwidth, but, in some examples, different center frequencies, as mentioned above.

In some examples, the optical waveguide 1 may comprise or may be an optical fiber 1, and the following description primarily refers to element 1 of Fig. 2 as an optical fiber. Note, however, that the principle of the disclosure may also be applied to optical waveguides other than optical fibers.

In some examples, see Fig. 2, the optical interrogation signals IS-1, IS-2, ... may be applied to a first end section 1a of the optical fiber 1, and the plurality PL-RS of response signals RS-1, RS-2, ... may be obtained by receiving, at the first end section 1a, respective signal portions of the interrogation signals IS-1, IS-2, ... after backscattering in the optical fiber 1.

In some examples, Fig. 2, one or more optical sources 12a for providing the optical interrogation signals IS-1, IS-2, ... may be arranged at the first end section 1a of the optical fiber 1, and one or more detectors 12b for receiving the plurality PL-RS of response signals may also be arranged at the first end section 1a of the optical fiber 1.

In some examples, the elements 12a, 12b may be combined, e.g., in the form of an optical transceiver 10 or instrument, respectively, for DAS. In some examples, an apparatus 100, 100' for performing one or more aspects of the disclosure may be provided for, e.g., integrated into, the transceiver 10.

In some examples, Fig. 3, performing 200 the plurality of DAS measurements comprises applying 200a the plurality PL-IS of optical interrogation signals at two different polarizations and receiving 200b the plurality PL-RS of backscattered response signals at two, e.g., another two, different polarizations, so that polarization resolved measurements may be performed.

In some examples, the instructions 106, when executed by the at least one processor 102, cause the apparatus 100 to perform at least one of: a) reduce noise caused by at least one of birefringence or polarization fluctuations based on the plurality of response signals RS-1, RS-2, ... at the two different polarizations, or b) determine a fiber detuning associated with a fast axis and a fiber detuning associated with a slow axis and perform averaging of the fiber detuning associated with the fast axis and the fiber detuning associated with the slow axis, or c) determine a birefringence of the optical fiber 1 as a function of a position along the optical fiber 1.

The optional block 204 of Fig. 3 symbolizes an optional storing of the aggregated response AR, e.g., in a memory, e.g., non-volatile memory, e.g., of the apparatus 100, 100' (Fig. 2), see, for example, element 104 of Fig. 1A.

In some examples, Fig. 4, the instructions 106, when executed by the at least one processor 102, cause the apparatus 100 to: apply 210 a periodic optical interrogation signal IS having a predetermined interrogation bandwidth and a predetermined interrogation period to the optical fiber 1.

In some examples, Fig. 4, the instructions 106, when executed by the at least one processor 102, cause the apparatus 100 to modify 212, e.g., scan, a center frequency of the periodic optical interrogation signal IS such that frequency spectra of the optical interrogation signal IS in subsequent interrogation periods overlap. In some examples, the plurality PL-IS of optical interrogation signals IS-1, IS-2, ... as explained above, e.g., with respect to block 200 of Fig. 3, may form or represent the periodic optical interrogation signal IS with overlapping frequency spectra in subsequent interrogation periods according to block 210 of Fig. 4.

In some examples, Fig. 4, the instructions 106, when executed by the at least one processor 102, cause the apparatus 100 to wait 214 for at least one environmental perturbation EP (e.g., pressure, or strain, or temperature variations, see the flash symbol EP of Fig. 2) associated with the optical fiber 1 to vary a frequency detuning of at least one backscattered response signal, such that the spectra of the interrogation signal in subsequent interrogation periods overlap.

In some examples, Fig. 4, at least one of the aspects 212, 214 may be performed, e.g., a) either aspect 212, or b) aspect 214, or c) both aspect 212 and aspect 214.

In some examples, Fig. 4, the instructions 106, when executed by the at least one processor 102, cause the apparatus 100 to: receive 216, for at least two, e.g., subsequent, interrogation periods, a respective backscattered response signal RS-1, RS-2, ... which characterizes a complex impulse response of the optical fiber 1 to the respective interrogation signal(s) IS-1, IS-2, .... In some examples, for each interrogation period a respective frequency shifted instance IS-1, IS-2, ... of the periodic optical interrogation signal IS has been applied to the optical fiber 1, and a respective backscattered response signal RS-1, RS-2, ... may be received.

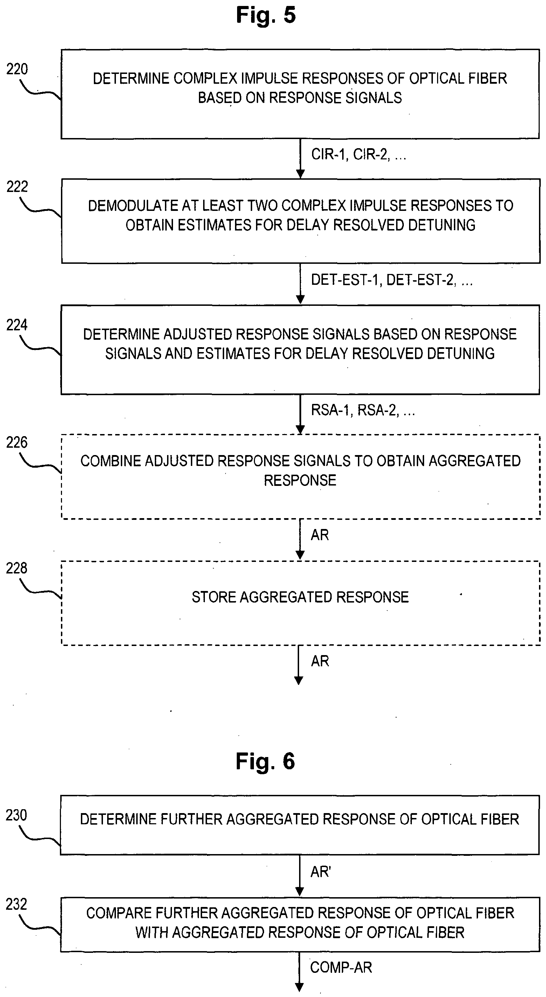

In some examples, Fig. 5, the instructions 106, when executed by the at least one processor 102, cause the apparatus 100 to: determine 220 at least two complex impulse responses CIR-1, CIR-2, ... (e.g., as opposed to pure magnitude or pure phase responses) of the optical fiber 1 based on at least two response signals RS-1, RS-2, ... of the plurality PL-RS (Fig. 2) of response signals, e.g., by extracting the respective complex impulse response CIR-1, CIR-2, ... from the respective response signal RS-1, RS-2, ... of the optical fiber 1, demodulate 222 the at least two complex impulse responses CIR-1, CIR-2, ... to obtain respective estimates DET-EST-1, DET-EST-2, ... for a delay-resolved detuning associated with the complex impulse responses CIR-1, CIR-2, ..., determine 224 adjusted response signals RSA-1, RSA-2, ... based on the at least two response signals RS-1, RS-2, ... and based on the estimates DET-EST-1, DET-EST-2, ... for the delay-resolved detuning.

In other words, some examples propose to, for each interrogation period, extract the complex fiber impulse response CIR-1, CIR-2, ... from the respective backscattered response signal RS-1, RS-2, ..., see, for example block 220 of Fig. 5, and demodulate 222 the backscattered response signals RS-1, RS-2, ... to obtain the estimates DET-EST-1, DET-EST-2, ... for the delay-resolved detuning that is, e.g., essentially independent on the interrogation frequency change caused by the modifying, e.g., scanning (see, for example, block 212 of Fig. 4). Further, some examples propose to, for each interrogation period, remove the delay-resolved detuning (e.g., in the form of the estimates DET-EST-1, DET-EST-2, ..., as obtained by block 222 of Fig. 5), from the extracted backscattered response signals RS-1, RS-2, ... to obtain the adjusted backscattered response signals RSA-1, RSA-2, ..., also see block 224 of Fig. 5.

In some examples, Fig. 5, the instructions 106, when executed by the at least one processor 102, cause the apparatus 100 to: combine 226 the adjusted response signals RSA-1, RSA-2, ... to obtain the aggregated response AR. In other words, in some examples it is proposed to combine multiple, e.g., all, adjusted backscattered responses RSA-1, RSA-2, ..., into the aggregated response AR which represents a broadband response with a larger bandwidth than the interrogation bandwidth. This enables to efficiently obtain a broadband response characterizing a broadband complex impulse response of the optical fiber 1, e.g., as compared to an individual impulse response as may be obtained by applying one single interrogation signal IS-1 with its comparatively small interrogation bandwidth.

In other words, in some examples, the plurality PL-RS (Fig. 2) of response signals may be adjusted to compensate for changes in a fiber detuning during a plurality of DAS measurements, e.g., before combining 226 the adjusted response signals.

In some examples, Fig. 5, the instructions 106, when executed by the at least one processor 102, cause the apparatus 100 to: store 228 the aggregated response AR, e.g., for future evaluation. In some examples, the aggregated response AR may, e.g., be used as a reference broadband response of the optical fiber 1, e.g., for comparison with at least one further aggregated response AR' (see Fig. 6) that may be obtained for the same optical fiber 1, e.g., at another point in time and/or for other environmental conditions.

In some examples, Fig. 6, the instructions 106, when executed by the at least one processor 102, cause the apparatus 100 to: determine 230 a further aggregated response AR' of the optical fiber 1, compare 232 the further aggregated response AR' of the optical fiber 1 with the aggregated response AR of the optical fiber 1. In some examples, based on the comparison COMP-AR, a delay-resolved change in a detuning of the optical fiber may be determined.

In some examples, the detuning denotes an optical frequency shift of a back scattering spectrum from an optical fiber (or waveguide or path of propagation), which, in some examples, may depend on, e.g., be proportional to, changes in a fiber transmission delay, e.g., due to strain or refractive index change. Thus, in other words, in some examples, aspects according to the disclosure may be used to: a) establish a reference instance of a broadband complex impulse response, e.g., in the form of the aggregated response AR, as, e.g., obtained according to block 202 of Fig. 3 or block 226 of Fig. 5, b) determine, e.g., measure, at least one further broadband complex impulse response, e.g., in the form of the further aggregated response AR', see block 230 of Fig. 6, c) compare the at least one further broadband complex impulse response, e.g., element AR', to the reference complex impulse response, e.g., element AR, e.g., to determine a delay-resolved change in detuning of the optical fiber 1.

In the following, further example aspects of the disclosure are disclosed which are related to determining, e.g., measuring, delay-resolved fiber responses $h_k(\tau)$ with overlapping frequency spectra with an interrogation bandwidth SBW, e.g., while scanning the center frequency of an interrogation signal $\nu_k$ over a bandwidth BW > SBW, and demodulating a (e.g., potentially time varying) fiber detuning $d_k$, e.g., at each center frequency.

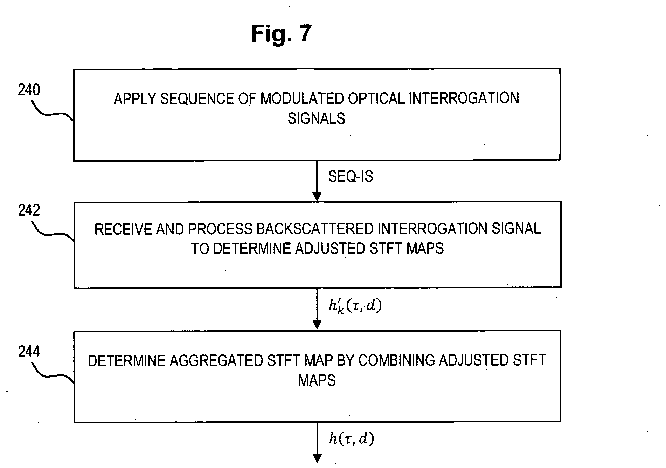

In some examples, Fig. 7, the instructions 106, when executed by the at least one processor 102, cause the apparatus 100 to apply 240 to the optical fiber 1 (Fig. 2) a sequence SEQ-IS of N many modulated optical interrogation signals $exp(i2\pi\nu_k t)M(t)$, wherein $\nu_k$, k = 1 ... N characterizes a center frequency of a k-th modulated optical interrogation signal, wherein $M(t)$ is a time (t)-dependent pulse modulation function implementing a modulation pulse with a or the predetermined interrogation bandwidth SBW, wherein i is the imaginary unit, by scanning the center frequency $\nu_k$ of the

sequence SEQ-IS of the modulated optical interrogation signals over a predetermined scanning bandwidth BW, wherein $v_k - v_{k-1} <$ SBW. In some examples, the criterion $v_k - v_{k-1} <$ SBW ensures a suitable overlap of the frequency spectra the respective interrogation signals.

In some example embodiments, the modulated optical interrogation signal $exp(i2\pi v_1 t)M(t)$ may, e.g., correspond with a first interrogation signal IS-1 (Fig. 2) of the plurality PL-IS of interrogation signals, the modulated optical interrogation signal $exp(i2\pi v_k t + \varphi_k)M(t - t_k)$ may, e.g., correspond with a second (or k-th) interrogation signal IS-2 (Fig. 2) of the plurality PL-IS of interrogation signals, wherein $t_k$ denotes a start time of an interrogation period k, and wherein $v_k$ and $\varphi_k$ denotes a frequency and a phase offset, respectively, of a pulse in the interrogation period k. In some examples, for the sake of clarity, the time axis variable "t" may be considered restarted for each interrogation period k, so that $t_k$ is not explicitly mentioned. The phase offset $\varphi_k$ may be considered in all instances of these expressions throughout this disclosure, although not necessarily explicitly mentioned for the sake of clarity.

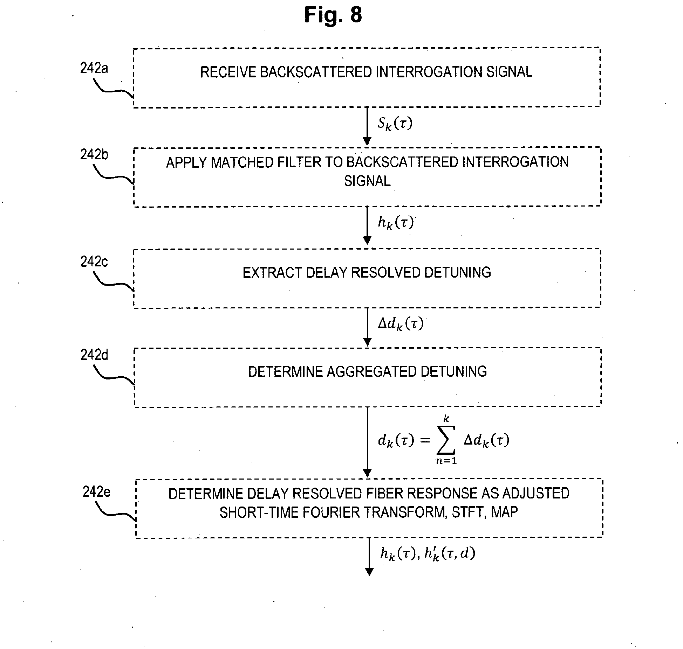

In some examples, Fig. 7, the instructions 106, when executed by the at least one processor 102, cause the apparatus 100 to perform, e.g., for each of the N many modulated optical interrogation signals, at least one of the following aspects 242a, 242b, ..., 242e collectively symbolized by block 242 of Fig. 7 and individually indicated by blocks 242a et seq. of Fig. 8: a) receiving 242a a backscattered interrogation signal $S_k(\tau)$, where $\tau$ characterizes a delay since a start of a transmitted modulation pulse (e.g., start of transmission of modulated optical interrogation signal), or b) applying 242b a matched filter to the received backscattered interrogation signal $S_k(\tau)$ (e.g., by correlation with the pulse modulation function $M(-t)$), to extract an estimate for a delay-resolved fiber response $h_k(\tau)$, or c) extracting 242c a delay-resolved detuning $\Delta d_k(\tau)$ since an interrogation at a previous frequency $v_{k-1}$ based on a signal in the overlapping frequency bands of the backscattered interrogation signal $S_k(\tau)$ and a previous backscattered interrogation signal $S_{k-1}(\tau)$ using a DAS demodulation technique, wherein, for a first iteration, k=1, the delay-resolved detuning $\Delta d_1(\tau)$=0, or d) determining 242d an aggregated detuning since a start of the sequence SEQ-IS (see block 240 of Fig. 7), e.g., as $d_k(\tau) = \sum_{n=1}^{k} \Delta d_k(\tau)$,

or e) determining 242e, e.g., representing the delay-resolved fiber response $h_k(\tau)$ as, an adjusted short-time Fourier transform, STFT, map $h'_k(\tau, d)$ with a time resolution $\delta\tau$ characterizing a sampling interval of the delay-resolved fiber response $h_k(\tau)$, where the delay-resolved fiber response $h_k(\tau)$ is shifted by $(v_k - v_0 + d_k(\tau))$ to represent a sample of the response at a start of the sequence SEQ-IS relative to an optical reference frequency $v_0$, e.g., in accordance with

$$h'_k(\tau, d) = h_k(\tau) \cdot$$

$$\exp\left(i2\pi\left(\int_0^\tau d_k(t)\, dt + (v_k - v_0)\tau\right)\right) \cdot \text{interp}\left((v_k - v_0 + d_k(\tau) - d)\ \delta\tau\right)$$ , wherein d charac-

terizes a discrete detuning axis of the STFT map $h'_k(\tau, d)$ with a sampling interval $1/\delta\tau$, wherein interp(x) characterizes an interpolation function, e.g., according to interp(x) = $\sin(\pi x)/(\pi x)$, e.g., sinc $(\pi x)$.

Returning to Fig. 7, in some examples, the instructions 106, when executed by the at least one processor 102, cause the apparatus 100 to determine 244 an aggregated STFT map $h(\tau,d)$ by combining the adjusted STFT maps

$h'_k(\tau, d)$ using a weighted averaging procedure, e.g. in accordance with $h(\tau,d) = \frac{\sum_{k=1}^{N} h'_k(\tau,d)\, W_k(d)}{\sum_{k=1}^{N} W_k^2(d)}$, where $W_k(d)$ = A

$(d) \cdot \text{interp}((v_k - v_0 + d_k(\tau) - d)\, \delta\tau)$, wherein A(d) characterizes, e.g., a power spectral density of the pulse modulation function $M(t)$. In other words, some examples propose to combine the adjusted STFT maps $h'_k(\tau, d)$ into the aggregated STFT map $h(\tau,d)$ that is representative for a state of the optical fiber 1 at the start of the scan (e.g., start of applying 240 the sequence SEQ-IS, see Fig. 7).

In some examples, Fig. 7, the aggregated STFT map $h(\tau,d)$ as obtained by block 244 may represent at least one of the aggregated response AR or the at least one further aggregated response AR'. In other words, in some examples, the aspects of Fig. 7, 8 may be used to determine at least one of the elements AR, AR'.

Fig. 9 shows aspects of detuning of a backscattered optical signal in an STFT delay-frequency domain according to some examples. A horizontal axis represents a back reflection delay $\tau$, and a vertical axis represents a frequency detuning d. Solid lines symbolize locations of spectral details at a reference instance. Dashed lines symbolize locations of the same spectral details after detuning, e.g., due to stain and/or refractive index change being applied to or effected in the optical fiber 1 (-Fig. 2) in a delay range DR (Fig. 9).

Some examples, Fig. 1B, relate to an apparatus 100' for distributed acoustic sensing, the apparatus 100' comprising means 102' for: performing 200 (Fig. 3) a plurality of distributed acoustic sensing, DAS, measurements by applying a plurality of optical interrogation signals to an optical waveguide, e.g., fiber, and receiving a respective plurality of backscattered response signals from the optical fiber in response to the plurality of interrogation signals, the response signals having delay-resolved spectra comprising delay-resolved spectral features of the optical waveguide 1, wherein at least some of the delay-resolved spectral features are shifted in frequency, wherein at least two of the response signals comprise a same part of the delay-resolved spectral features, determining 202, based on the plurality of response signals, an aggregated response AR of the optical fiber 1.

In some examples, Fig. 1B, the means 102' may, e.g., comprise at least one processor 102 (see, e.g., Fig. 1A), and at least one memory 104 storing instructions 106 that, when executed by the at least one processor 102, cause the apparatus 100' to perform at least one of the aspects of the disclosure.

In some other examples, however, Fig. 1B, the means 102' may, e.g., comprise circuitry 104' for performing at least one of the aspects of the disclosure.

Some examples, Fig. 3, relate to a method for distributed acoustic sensing, the method comprising: performing 200 a plurality of distributed acoustic sensing, DAS, measurements by applying a plurality of optical interrogation signals to an optical waveguide, e.g., fiber, and receiving a respective plurality of backscattered response signals from the optical fiber in response to the plurality of interrogation signals, the response signals having delay-resolved spectra comprising delay-resolved spectral features of the optical waveguide 1, wherein at least some of the delay-resolved spectral features are shifted in frequency, wherein at least two of the response signals comprise a same part of the delay-resolved spectral features , determining 202, based on the plurality of response signals, an aggregated response of the optical fiber.

In the following, further aspects and examples are disclosed, which, in some examples, may be combined with at least one of the aspects and/or examples disclosed above.

In some examples, the principle according to the disclosure may be used to determine, e.g., measure, a complex backscattering response of an optical waveguide, e.g., the optical fiber 1, e.g., a sensor fiber, with a spectral characterization bandwidth (scanning bandwidth) that is larger than a probe pulse bandwidth (e.g., bandwidth of individual interrogation signal IS-1, IS-2, ...), e.g., of the DAS instrument 10 (Fig. 2).

In some examples, the center frequency of the DAS instrument 10 (e.g., for the individual interrogation signals IS-1, IS-2, ...) is modified, e.g., scanned, e.g., comparatively slowly, e.g., across the characterization bandwidth, e.g., such that an optical center frequency change between subsequent interrogation signals IS-1, IS-2, ... is less than the interrogation bandwidth SBW. As already mentioned above, this may provide a spectral overlap between subsequent interrogation signals IS-1, IS-2, ... that allows the detuning of the fiber response of the optical fiber 1 to be demodulated, e.g., using conventional DAS techniques, as, e.g., disclosed by Waagaard, Ole Henrik, et al. "Real-time low noise distributed acoustic sensing in 171 km low loss fiber.." OSA continuum 4.2 (2021): 688-701, which is hereby incorporated by reference in its entirety.

In some examples, a demodulated DAS signal may be used to correct or adjust the response signals RS-1, RS-2, ... measured, e.g., during the slow frequency scan, e.g., such that they all represent the same detuning state of the optical fiber 1, see, for example, block 224 of Fig. 5. After the adjustment, the responses may combined, see, e.g., blocks 202 (Fig. 3), 226 (Fig. 5), 244 (Fig. 7), e.g., to obtain a broadband representation of the optical fiber response. In some examples, a bandwidth of the combined optical fiber response may equal a scanning range of the DAS interrogation center frequency v.

In some conventional approaches, traditional DAS interrogators measure a spatial distribution of a detuning of a backscattered response from optical fiber waveguides since a last start of interrogation. This means that changes in detuning during time periods where the interrogator is turned off, or interrogation is stopped, cannot be recovered by these conventional systems.

By contrast, by determining, e.g., measuring the optical fiber response with a comparatively broad bandwidth, e.g., according to the principle of the disclosure, it can be ensured that parts of the measured response spectrum from a specific section of the optical fiber 1 overlaps with a spectrum of a reference recording, see, e.g., element AR of block 228 of fig. 5, e.g., even if the spectrum has been shifted or detuned by more than the bandwidth of the DAS interrogation pulses. In this way, in some examples, a detuning relative to the reference recording can always be determined.

In some examples, Fig. 2, the DAS measurements M-1, M-2, ... may employ a dual polarization transmitter 12a and receiver 12b, e.g., to obtain all four Jones matrix components of the scattering response of the respective response signals RS-1, RS-2, .... The Jones matrix is a 2x2 complex matrix used in optics to represent how an optical element or system affects the amplitude and phase of polarized light. In some examples, this may enable to reduce, e.g., suppress, a sensitivity, e.g., to fluctuations in an interrogating polarization state, which may, e.g., occur due to vibrations or temperature changes in the optical fiber 1.

In some examples, one or more of the following aspects A) et seq. may be combined, e.g., to provide DAS measurements to obtain one or more aggregated responses AR, AR', also see blocks 202, 204 of Fig. 3 and block 230 of Fig. 6:

A)Determination, e.g., measurement, of a broadband fiber response (e.g., aggregated response AR), e.g., for DAS, e.g., by combining

A1) DAS demodulation using interrogation signals IS-1, IS-2, ... with a comparatively moderate bandwidth of, e.g., 80 MHz or 90 MHz, that are repeated with a comparatively short period (e.g., similar to a total fiber delay of the optical fiber 1),

A2) comparatively slow scanning of the center frequency v of the DAS interrogation signals IS-1, IS-2, ... over a comparatively wide bandwidth such that interrogation signals IS-1, IS-2 in subsequent periods overlap in frequency, wherein frequency steps of about 7 MHz may be used for the scanning,

A3) combining of the overlapping responses obtained by the scanning according to aspect A2) into a broadband response in a way that corrects for changes in the fiber detuning that occur during the scan into a broadband response.

B) Comparing a further, e.g., last measured, broadband response (e.g., element AR' of Fig. 6) with a reference broadband response (e.g., element AR of Fig. 3, e.g., representing a permanent reference), e.g., to determine a fiber detuning versus delay relative to a reference state of the optical fiber 1 (as characterized by the reference broadband response), and, based on the comparison, determining a temperature and/or strain versus delay relative to the reference state of the optical fiber 1.

C) Combining any of the aspects A), B) above with, e.g., fully, polarization resolved measurements, e.g., to be able to resolve fiber birefringence and/or suppress errors due to fluctuations in an interrogating polarization state.

D) Exploiting broadband polarization resolved measurements to measure the birefringence of the optical fiber 1, and/or parameters (e.g., sensing measurand(s) for DAS) that depend on the fiber birefringence.

E) Exploiting the broadband fiber response AR to obtain DAS measurements with a delay resolution better, e.g., much better, than an inverse of the bandwidth of the periodic interrogation signal modulation.

F) Exploiting the broadband fiber response AR to suppress Rayleigh-related nonlinearities in the DAS response related to, e.g., the randomness of the phase of the Rayleigh scattered signal versus detuning on detuning scales > ~1/SBW.

In some examples, Fig. 2, the DAS measurements M-1, M-2, ... may be made by transmitting the optical interrogation signal IS or IS-1, IS-2, ..., respectively, with a given bandwidth SBW into the optical fiber 1 and measuring the backscattered fiber response in the form of the response signals RS-1, RS-2, ... as function of delay. The interrogation signal IS is, for example, repeated with a cycle period, e.g., yielding the optical interrogation signals IS-1, IS-2, ..., and changes in the fiber response may be analyzed based on the response signals RS-1, RS-2, ..., e.g., to provide information about changes in the state of the optical fiber 1.

In some conventional approaches, techniques that use plain pulsed interrogation (e.g., without frequency or phase modulation) may have an interrogation bandwidth SBW given by the inverse of the pulse duration, whereas techniques that use frequency swept interrogation (FSI) with coherent detection and pulse compression may, e.g., have pulse durations > 1/SBW, e.g., allowing the pulses to be spread out in time, e.g., to allow higher pulse energies. In some examples, such FSI techniques may apply pulse compression to the received, e.g., detected signals, e.g., by passing them through a matched filter that is matched to the transmitted pulse shape. In some examples, this allows the complex back-scattered fiber response to be extracted with a delay resolution in the order of 1/SBW. In some examples, on this basis, DAS phase signals revealing possible perturbations on the fiber may be extracted.

In some examples using the principle according to the disclosure, the DAS measurements M-1, M-2, ... are arranged to obtain a complex response from the optical fiber 1 (Fig. 2). In some examples, this may be achieved using the abovementioned FSI technique and matched filtering. In some other examples, the same information may also be obtained with other DAS measurement techniques.

In some examples, the fiber response may often be dominated by the Rayleigh response caused by Rayleigh scattering. The corresponding Rayleigh spectrum may, e.g., be modelled as a white stochastic complex spectrum with a much larger bandwidth than typical values of the interrogation bandwidth SBW. In some examples, the Rayleigh response may constitute a unique fingerprint originating from scatterers created by thermal fluctuations that are frozen into the material, e.g., glass, during a production of the optical fiber 1.

In some examples, any change in the strain or the refractive index in a part of the optical fiber 1 may elongate the fiber response in a delay dimension. This may cause the spectrum of the fiber response in a corresponding delay range to be shifted or detuned in frequency. Some conventional systems, e.g., state-of-the art DAS interrogators, are able to extract a relative elongation of the delay axis as a .function of delay, or an equivalent detuning of the response spectrum, by analyzing changes in the fiber response. This may, e.g., be done by comparing a phase change of neighboring resolved reflectors or delay sections. In some conventionalapproaches, this comparison may be made against a previous interrogation cycle, or against a reference that should be updated regularly. In some conventional systems, the reference should, e.g., be updated when a detuning from the reference becomes comparable to or exceeds the interrogation bandwidth SBW, since the Rayleigh spectrum is a white noise spectrum with uncorrelated frequency components.

In some conventional systems and techniques, changes in detuning that are not recorded when an interrogation device, e.g., instrument, is turned off cannot be recovered when the instrument is turned back on. To address this shortcoming, in some examples according to the principle of the disclosure, it is proposed to generate a reference response, e.g., a permanent reference response, that covers a bandwidth that is larger than a maximum detuning range of the optical fiber 1.

Using the principle according to the disclosure, a DAS interrogation device or system can be provided, that is capable of measuring the complex fiber response from the optical fiber 1 with a comparatively large bandwidth, e.g., by comparatively slowly scanning the center frequency of the interrogation signal IS (Fig. 2), e.g., such that the center frequency of the interrogation pulses changes by less than the probe signal bandwidth SBW between the repetition periods of the probe signal, e.g., between subsequent interrogation signals IS-1, IS-2, .... In some examples, this allows for, e.g., continuous, monitoring of any detuning changes in the optical fiber 1 that may occur while the center frequency is scanned.

In some examples, the detuning of the different measured responses RS-1, RS-2, ... from the optical fiber 1 can therefore be adjusted in processing, e.g., to correct for such detuning changes, e.g., before they are combined into a continuous response spectrum with a bandwidth BW covering at least the whole scanning range of an optical source, e.g., laser, providing the interrogation signal(s).

In some examples, a first measurement of the combined spectrum can be used as a permanent reference with large bandwidth, whereas later measurements may, e.g., be compared with the permanent reference, e.g., to determine a spatially resolved detuning of the optical fiber since the reference recording, as will be explained in further detail below.

In some examples, response representations in the delay and frequency domains may be considered equivalent and are, e.g., connected by the Fourier transform. In some examples, a hybrid representation of the optical fiber response may, e.g., be achieved by using a discrete short-time Fourier-transform, STFT. In some examples, the STFT enables to map the complex reflectivity of the optical fiber 1 in two dimensions, one being the time-of-flight fiber delay $\tau$ and the other being the interrogation frequency. In some examples, the STFT may, e.g., be determined, e.g., constructed, from a delay domain representation, e.g., by dividing the response into segments with duration $\delta\tau$ and by taking the Fourier transform of each segment. The resulting frequency resolution $\delta\nu$ is given by the inverse of the length of these segments, and in some examples, $\delta\nu \cdot \delta\tau = 1$.

In some examples, the representation of the combined fiber response in the STFT domain may be denoted as a "fiber response map". More specifically, in some examples, the STFT representation of the permanent reference response (see, for example, the aggregated response AR of Fig. 3, 5), may be denoted as "reference response map".

In some examples, the center frequency of the optical interrogation signal IS may be modified, e.g., stepped, e.g., using discrete steps, e.g., equidistant frequency intervals of, e.g., 7 MHz, which are, e.g., significantly smaller than the interrogation bandwidth SBW. In some other examples, a continuous modification of the center frequency of the optical interrogation signal IS may be used. In some examples, a resulting band overlap between the steps may allow for continuous demodulation of any detuning of the fiber response since the start of the frequency scan.

In some examples, each response to the applied optical interrogation signal measured during a frequency scan may be resampled and converted to the response map representation (in the STFT domain, as mentioned above), and a measured detuning since the start of the scan may be removed. The resulting responses may be combined into a continuous broadband response, which could be the reference response or, a later recorded response that can be compared to the reference response to provide information about the detuning since the reference response recording. With the approach according to the examples as described above, a measured response may represent the detuning state of the optical fiber 1 at the time when the frequency scan was started.

In some examples, the STFT response map may have a delay resolution $\delta\tau$ that is an integer fraction of the sample spacing of the fiber response measured in each interrogation cycle.

The individual measured responses may, e.g., be upsampled to a period of $\delta\tau$, , e.g., before applying an interpolation between the STFT frequency bins corresponding to the interrogation frequency of each measurement, e.g., corrected for detuning measured since the start of the current frequency scan. Aspects of combining and enhancing the response maps according to some examples are further discussed in some of the sections below.

Once a response map has been determined, e.g., constructed, in some examples, it may be transformed into one or more other representations, e.g., depending on an application, for instance a pure delay domain representation, a pure frequency domain representation, or STFT representations with other values for $\delta\tau$ and $\delta\nu = 1/\delta\tau$.

In some examples, the capability to map the fiber response over a comparatively wide bandwidth, based on the principle of the disclosures, enables to provide at least one of the following enhancements, e.g., in the form of capabilities of a DAS interrogator (see, for example, device 10 of Fig. 2): a) very high spatial resolution, or b) permanently referenced measurements, or c) suppression of low frequency noise, or d) high resolution birefringence measurements, or e) nonlinearity suppression. At least some of these aspects will be described in more detail in some of the sections below.

In the following, example aspects related to permanently referenced measurements according to some examples based on the principle of the disclosure are provided.

As mentioned above, the Rayleigh response of an optical fiber 1 constitutes a unique fingerprint originating from thermal fluctuations that are frozen into the fiber's material, e.g., glass, e.g., during production. If a section of the optical fiber 1 with a return delay $\tau$ from the transmitter 12a (Fig. 2) and back to the interrogator is strained by $\varepsilon(\tau)$ or changes refractive index by $\Delta n(\tau)$, the reflected fiber response from the corresponding delay range at frequency $\nu$ will be shifted in frequency by the fiber detuning, e.g., according to : $d_F(\tau) = - [\varepsilon(\tau) + \Delta n(\tau)/n_0)] \nu \approx - [\varepsilon(\tau) + \Delta n(\tau)/n_0] \nu_0$ .

Here, it is assumed that $\nu \approx \nu_0$. In some examples, the strain and refractive index of the optical fiber 1 during the reference map measurement may be defined to equal zero (strain) and $n_0$ (refractive index), respectively. In some examples, the refractive index $n_0$ may have small variations as a function of $\tau$. However, in some examples, e.g., in most cases, this variation may be ignored without significant loss of accuracy.

In some examples, e.g., to determine the fiber detuning relative to the reference map recording by correlating the last measured fiber response map with the initially measured reference response map along the frequency axis, the fiber detuning $d_F(\tau)$ may be determined for each resolved value of $\tau$ as an interpolated frequency shift of a peak in a correlation along the frequency axis, e.g., a correlation of a new aggregated response AG' with a reference (e.g., permanent) aggregated response AG. In this way, in some examples, the fiber detuning $d_F(\tau)$ can be determined even if no continuous measurements between the reference recording and the last recording have been performed. In some examples, the reference recording may be denoted as "permanently referenced measurement", since the zero-point reference of the measured detuning is permanent. In some examples, this allows for conducting spatially and/or temporally resolved measurements of temperature and/or strain, e.g., relative to the reference state of the optical fiber 1, e.g., without a need for continuous measurements of fiber detuning changes, e.g., after the reference recording.

To ensure a good signal-to-noise ratio and/or to avoid false correlation matches between the last measured and the reference map, in some examples, the correlation may be made over a substantial number of resolved frequencies $N_\nu$ = BW/$\delta\nu$, for example $N_\nu > 15$ or $N_\nu > 40$.

In some examples, e.g., to avoid smearing of a correlation peak, the detuning $d_F(\tau)$ should be uniform (e.g., change little with $\tau$) to within < $\delta\nu$/2 inside each resolved delay range with length $\delta\tau = N_\nu$ /BW.

As an example, if BW = 60 GHz and $N_\nu$ = 60, in some examples, a uniformity of the detuning $d_F(\tau)$ better than BW / $N_\nu$ / 2 = 0.5 GHz (e.g., equivalent to strain variations < ~3.3 $\mu\varepsilon$ or temperature variations < ~0.37 K if $\nu_0$ = 193 THz) within any delay range < $N_\nu$ /BW = 1 ns (e.g., equivalent to a fiber length of ~100 mm), may be used or tolerated.

As a further example, e.g., if BW = 60 GHz and $N_\nu$ = 15, it may be beneficial to have a uniformity of the detuning $d_F(\tau)$ better than BW / $N_\nu$ / 2 = 2 GHz (equivalent to strain variations < ~13 $\mu\varepsilon$ or temperature variations < ~1.5 K) within any delay range < $N_\nu$ /BW = 0.25 ns (equivalent to a fiber length of ~25 mm).

In the following, example aspects related to a dynamic range, dynamic range enhancement and reference noise reduction according to some examples based on the principle of the disclosure are provided.

In some examples, it may be useful that a change in detuning from the reference recording to the last recording is less than the scan bandwidth BW, thus ensuring that the measured detuned spectrum include a shifted part of the reference spectrum that can be matched in the correlation.

For example, if an overlap between the detuned and the reference spectrum of 5 GHz out of a reference map bandwidth of BW = 60 GHz centered near $\nu_0$ = 193 THz is used, in some examples, it may be possible to measure strain changes up to $\pm 285$ $\mu$strain relative to the reference state. In some examples, with an example temperature sensitivity of the optical fiber detuning of $7 \cdot 10^6$ /K the corresponding measurable temperature change is $\pm 40$ K.

In some examples, with a limited spectral overlap the delay resolution of the detuning may be the inverse of the spectral overlap. In an example where the spectral overlap is 5 GHz, the delay resolution may be 1/5 GHz = 200 ps (equivalent to 20 mm), and the detuning $d_F(\tau)$ should have a uniformity better than 5 GHz / (2 $N_\nu$) within any delay range < $N_\nu$ / 5 GHz = 0.25 ns in those regions where the overlap is 5 GHz.

In some examples, a last measured fiber response map may be shifted in frequency, e.g., by the determined, e.g., measured, detuning, and phase adjusted, e.g., to match the existing reference map, before averaging with the existing reference map, to create an updated reference map with reduced noise and improved accuracy.

In some examples, a part of the last measured and shifted map that does not overlap with an existing reference map may be used to extend a frequency coverage of the reference map, and thus the dynamic range of the measurements, e.g., beyond the bandwidth of the frequency scan performed by the instrument.

In the following, example aspects related to an enhanced spatial resolution according to some examples based on the principle of the disclosure are provided.

In some examples, a comparatively large scanning range of the interrogation frequency may allow for a comparatively high spatial resolution, e.g., compared to some conventional long-range DAS measurement approaches. In some examples, BW = 60 GHz may allow for a delay resolution of 17 fs, corresponding to a spatial resolution of 17 fs / ($v_g$/

2) $\approx$ 1.7 mm, where $v_g \approx 2 \cdot 10^8$ m/s is the fiber group velocity.

In some examples, e.g., to achieve the highest possible spatial resolution, it may be useful to convert the response map to the delay-domain, wherein the detuning may then be estimated with high spatial resolution by calculating a derivative versus delay of a phase change from the reference response to the last measured response and dividing the result by $2\pi$. In some examples, the result may be scaled with a temperature or strain sensitivity, e.g., to provide a temperature or strain change with high spatial resolution. In some other examples, spatial averaging may further be applied, e.g., to reduce noise at the expense of spatial resolution.

In the following, example aspects related to suppression of low frequency noise according to some examples based on the principle of the disclosure are provided.

In some conventional approaches, Rayleigh based DAS interrogators may only be able to measure changes in fiber detuning that occur while they are in operation, i.e., they essentially measure the change in detuning between every subsequent interrogation cycle by comparing the phase of the last response with the previous response. An integral detuning over time can then be calculated by summing these changes in the conventional systems. Changes in detuning occurring in periods when the conventional instrument is turned off will appear as an unknown offset in the measured detuning. Thus, it can be said that the reference of the measurement of these conventional systems is non-permanent.

In some examples, a common low-frequency noise contribution in DAS interrogators is Brownian or "random walk" noise that originates from white noise in the detuning difference measured between each interrogation cycle, resulting in a $1/f^2$ trend in the power spectral density of the detuning. This random walk drift may result in standard deviation of the measured detuning error that increases proportional to the square root of the time evolved since the start of a recording. By contrast, permanently referenced detuning measurements as may be obtained using the principle according to the disclosure do not rely on time integration of noisy signals and are therefore not expected to suffer from this kind of low-frequency noise.

In some examples, aspects of the principle according to the disclosure may provide a correction for random walk drift, e.g., each time a frequency scan is completed. In some examples, a phase of the measured response may be compared to the reference response, e.g., in every interrogation cycle, thus eliminating the random walk drift also during the frequency scans. In some examples, eliminating the random walk drift also during the frequency scans may be achieved by extracting a narrowband reference response from the permanent reference response shifted in frequency by a currently estimated detuning, with a same delay sampling period as the response obtained from a single interrogation cycle. In some examples, the narrowband reference response may be updated regularly, e.g., in every interrogation cycle. In some examples, only the phase and not the magnitude of the narrowband reference may be extracted, wherein a detuning of the last measured response relative to the reference may then be calculated as a phase difference between the two responses divided by $2\pi$ plus a currently estimated detuning that the permanent reference response was shifted by.

In the following, example aspects related to suppression of nonlinearity according to some examples based on the principle of the disclosure are provided.

It is known that conventional DAS demodulation methods may lead to nonlinear deviations of a measured detuning response from the actual detuning. In some examples, the example method described in the previous paragraph, where the response from each DAS cycle is compared with an extract from the reference response, may eliminate this kind of nonlinearities.

In some examples, e.g., when building a first reference response map, nonlinearity suppression based on a complete reference response is obviously not possible. In this case, in some examples, a detuning measurement may be based on an evaluation of a detuning or a phase shift between subsequent sweeps of the optical center frequency. In some examples, the nonlinearity may then be suppressed, e.g., by only using the spectral part of the response from a fiber section that overlaps with spectral response from the previous cycle for the calculation of the strain/detuning change. In this way, in some examples, nonlinearity errors may be corrected for during the demodulation. In some examples, a remaining part of the response bandwidth SBW may still be included when building the combined STFT map.

In the following, example aspects related to suppression of offset errors of an optical source 12a, e.g., laser frequency offset errors, according to some examples based on the principle of the disclosure are provided.

In some examples, a potentially important contributor to long term drift in permanently referenced measurement systems is an offset drift of the interrogation frequency. One possible approach to minimize such drift according to some examples is to include an optional reference section 1b (Fig. 2) of the optical fiber 1 that is isolated against temperature and strain changes as a section of the interrogated optical fiber 1. In some examples, the length of the reference section 1b may, e.g., be in the range from 100 m to 5 km. In some examples, e.g., to remove the abovementioned effect of the offset drift, the measured detuning of the reference section 1b may be subtracted from the measured detuning of the remaining optical fiber. In some examples, e.g., if the reference section 1b is a fiber coil enclosed in a chamber isolated from strain and temperature (not shown), the coil temperature may be monitored, and a known temperature dependence may be subtracted from the measured detuning of the reference section 1b, e.g., before using these data for corrections. In other words, in some examples, the reference section 1b may, e.g., be implemented by providing a respective section of the optical fiber 1 in a protected enclosure, e.g. a "shielded box" or the like, e.g., for deep sea applications. In some other examples, a comparatively large reference section 1b may be provided, enabling to provide a stable reference, e.g., for comparatively precise absolute measurements.

In the following, example aspects related to mapping assisted by conventional DAS measurements according to some examples based on the principle of the disclosure are provided.

In some examples, a challenge when mapping the fiber response spectrum may be that the fiber detuning $d_F(\tau)$ may change while the center frequency of the measurement is scanned. In some examples, this may result in a poor correlation between the reference STFT and one or more subsequent STFT maps, e.g., resulting in a comparatively poor accuracy in the measured detuning. In some examples, a poor correlation may also result in a smearing of the response, e.g., when being transformed to a one-dimensional delay domain, thus degrading an achievable spatial resolution.

As explained above, in some examples, it is proposed to use measurements provided by applying conventional DAS demodulation procedures to correct measured data for changes in fiber detuning since the start of the scan, e.g., before combining the measurements into a response map. In some examples, the resulting map may represent the fiber state at the start of the wavelength scan, and the detuning at this time relative to the permanent reference may be found by the correlation method according to some examples outlined above. In some examples, corrections for changes in measured fiber detuning that are based on data from individual interrogation cycles may only correct for detuning details with a delay resolution > 1/SBW. As a frequency scan proceeds, combined responses from different scan ranges may be compared to estimates for the detuning during the scan with improved spatial resolutions. In some examples, the spatial resolution of detuning corrections may therefore be improved when combining wider spectral sections of the scan response into the map.

In the following, example aspects related to polarization resolved interrogation according to some examples based on the principle of the disclosure are provided.

In some examples, fiber birefringence may imply a local difference in propagation speed between a fast and a slow axis, or the local polarization eigenmodes of the fiber propagation. In some examples, the local Rayleigh back-scatterers in a single mode optical fiber can be assumed to be polarization independent. This means that the reflected Rayleigh spectrum (or the spectrum of the back scattered response signals RS-1, RS-2, ...) from the fast and slow fiber axes are similar, e.g., except for a frequencydetuning $B = \nu_0 \cdot \Delta n_B / n_0$, where $\Delta n_B$ is the difference in refractive index between the two axes and $n_0$ is the mean index. In some examples, the directions of the fast and slow axes and magnitude of the birefringence in standard single mode optical fibers may vary randomly throughout the optical fiber. As an example, in the C-band ($\nu_0 \approx 193$ THz) typical values for the birefringent detuning can be in the order of B = ~ 60 MHz, corresponding to a beat length in the order of 3.5 m.

Some conventional DAS interrogators transmit interrogation signals with a fixed polarization state at the instrument output. Due to the birefringence of the optical fiber, e.g., the sensor fiber, the state of polarization (SOP) may change randomly as the signal propagates through the optical fiber. In these conventional approaches, some fiber sections may therefore be probed in the fast axis, some in the slow axis, and others in polarization states in between the fast and slow axis. If the sensor fiber or the fiber connecting the instrument to the sensor fiber changes birefringence, e.g., due to vibrations or other perturbations, the SOP of the interrogation signal may change so that the interrogated SOP may change everywhere in the fiber. This will cause variations in the measured detuning that can be in the order of the local fiber birefringence B. The variations will vary with the fiber location and appear as noise in the demodulated DAS data.

Polarization fading may be a problem for conventional DAS interrogators using single polarization coherent receivers, since such receivers can only detect the part of the reflected response that is aligned with the polarization of a local oscillator. In some examples, this problem may be addressed by using a dual polarization receiver. In some examples, a dual polarization receiver may be implemented by a polarization beam splitter that directs two orthogonal projections of the back scattered signal RS-1, RS-2, ... (Fig. 2) to two coherent receivers (not shown). By combining the information from two receiver signals according to some examples, polarization fading may be suppressed.

In some examples, since an orientation of the SOP relative to the local polarization axes is arbitrary, a measured response may be an arbitrary mix of the responses from the fast and slow optical fiber axes. In some examples, this may lead to up to three peaks in a cross correlation of a last recorded response map with the reference map along the frequency axis. Here, a center peak represents a sum of two correlation responses, the first being the correlation of the current slow axis response with the reference slow axis response and the second being the correlation of the current fast axis response with the reference fast axis response. The remaining two peaks represents the correlation of the current fast axis with the reference slow axis response and the correlation of the current slow axis with the reference fast axis response. In some examples, there may be only two peaks, for instance if the current probe signal or the reference probe signal is aligned with one of the local polarization eigenmodes (e.g., fast or slow axis). If, in some examples, the current and the reference probe signals are both aligned with either the fast or slow axis there may be only one peak. In some examples, e.g., when there are less than three peaks, an ambiguity in a solution occurs, because it is not known which axes have been interrogated.

In some examples, one way to address the aforementioned ambiguity may be to use information about neighboring fiber sections, e.g., where three peaks occur, e.g., to identify which axes were most likely interrogated during the current and the reference measurements. However, in some examples, this may be hard to achieve in some cases, for instance if a direction of the birefringence axes, or the common mode (average) detuning of the two axes, changes with a period that is shorter than the polarization beat length.

In some examples, therefore, it may be desirable to perform DAS measurements that may resolve the independent responses of the local eigen states, i.e. the fast and slow axis, along the optical fiber 1.

In this regard, in some examples, the DAS measurements M-1, M-2, ... may employ both a dual polarization transmitter and a dual polarization receiver, e.g., to obtain all four Jones matrix components of the scattering response(s) RS-1, RS-2, .... In some examples, the dual polarization transmitter can be implemented by including a polarization modulator (not shown) in the transmitter 12a (Fig. 2) that is configured to switch the interrogation signals IS-1, IS-2, ..., e.g., periodically, e.g., between two orthogonal polarization states. In some examples, such switching of probing SOPs may ensure that a total probing power is equally distributed between the fast and the slow axes of the optical fiber 1. In some examples, on this basis, four complex signals comprising the elements of the Jones matrix response map $A(v,\tau)$ describing the polarization resolved fiber response vs optical frequency $v$ and delay $\tau$ may be determined. In some examples, the four elements $A_{kp}$ of the Jones matrix response map $A(v,\tau)$ represent the responses from transmitter state k to receiver state p, where k, p $\in$ {x, y}.

In some examples, a polarization resolved measurement of the fiber response, here represented by $A(v,\tau)$, may contains information usable to discriminate a spatially resolved detuning in the local eigen SOPs representing the local fast and slow fiber axes. For instance, a polarization independent measure for a mean fiber detuning (e.g., common mode detuning) may, e.g., be provided as an average of a detuning in the fast and the slow fiber axes, while a measure for the fiber birefringence may, e.g., be provided as a difference between the detuning in the fast and the slow fiber axis.

In some examples, e.g., for each delay in the STFT representation $A(v,\tau)$, $N_v$ many spectral samples may be transformed, e.g., using an inverse Fourier transform, into $N_v$ many spatial samples, with a resolution $\delta\tau/N_v = BW^{-1}$. In some examples, a leading sample of each segment in this representation may, e.g., be determined, e.g., calculated as a mean over frequency $v$ of $A(v,\tau)$.

In some examples, this mean Jones matrix may be denoted as $\overline{A}(\tau)$, and it may be normalized such that the determinant det$\overline{A}(\tau)$ = 1. The normalization may, e.g., remove polarization independent loss and phase delay such that $\overline{A}(\tau)$ may, e.g., only, represent the change in SOP in transmission from the transmitter to a local reflector at delay $\tau$ and back. In some examples, the local reflectivity resolved by $\overline{A}(\tau)$ may be polarization independent, e.g., provided that the bandwidth BW of the sample $\overline{A}(\tau)$ is much larger than the polarization detuning B (meaning that the spatial resolution $v_g$/BW is much shorter than the polarization beat length $v_g$/B). Therefore, in some examples, $\overline{A}(\tau)$ may be a unitary matrix describing the change in SOP in the propagation from the transmitter to delay $\tau$ and back to the receiver.

In some examples, the matrix $\overline{A}(\tau)$ may be used to determine, e.g., compute a transformed Jones matrix $A'(v,\tau)$ = $\overline{A}^H(\tau)A(v,\tau)$, where superscript $H$ denotes a conjugated transpose. In some examples, it can be shown that with this transformation the effect of a SOP change from the delay $\tau$ to the receiver may be removed, and the matrices may have orthogonal eigenvectors representing the local slow and fast axes. If these eigenaxes remain constant over a length given by the delay resolution $\delta\tau$, in some examples, the orientation of the eigenaxes may be equal for all frequencies $v$.

In some examples, the response in the slow and fast axes may be determined, e.g., calculated, using an eigenvalue decomposition, e.g., in accordance with $A'(v,\tau) = U(v,\tau)\Lambda(v,\tau)U^H(v,\tau)$, where $U(v,\tau)$ is a unitary eigen vector matrix with columns representing an orientation of the local fast and slow axes relative to the transmitter states and $\Lambda(v,\tau)$ is a diagonal matrix comprising the eigenvalues. In some examples, if the eigenaxes remain constant over a length given by the delay resolution $\delta\tau$, it may be useful to define an eigenvector matrix $\overline{U}(\tau)$ that is common for all frequencies. One comparatively simple approach according to some examples may, e.g., comprise to determine, e.g., calculate $\overline{U}(\tau)$ as a mean over a frequency axis of the eigenvector matrix $U(v,\tau)$. In some examples, the diagonal matrix $\Lambda(v,\tau)$ may now be redefined, e.g., as $\overline{U}^H(\tau)A'(v,\tau)\overline{U}(\tau)$, which may still be approximately diagonal, e.g., with diagonal elements $\lambda_f(v,\tau)$ and $\lambda_s(v,\tau)$ representing the local fast and slow axis responses, respectively.

In some examples, e.g., once the diagonal elements $\lambda_f(v,\tau)$ and $\lambda_s(v,\tau)$ have been obtained for all resolved delays $\tau$ in the STFT representation, they may be used as permanent reference maps for the fiber response in the fast and slow axis, respectively. As an example, when a polarization resolved response is recorded at a later instance, this response may be aligned to the slow and fast axes using the same approach as outlined above according to some examples, and the resulting response maps may, e.g., be correlated with the respective reference maps to determine the detuning of the slow and fast fiber axes relative to the reference state.

In some examples, an average of the two detuning values for the slow and fast fiber axes relative to the reference state may serve as a polarization independent (e.g., common mode) measure for the change in fiber detuning, while the difference of the two detuning values for the slow and fast fiber axes relative to the reference state describes the change in the local birefringence since the reference recording. In some examples, an absolute birefringence may be determined by correlating the two eigenvalues of the last measured response to determine their relative detuning.

In cases where a change of the fiber birefringence B is below a predetermined threshold, e.g., does not change much, and where there is no need to extract the birefringence, e.g., as a measurand, a decomposition into separate responses of the two eigenaxes may be omitted in some examples. In this case, it may be used that $A(v,\tau) = \overline{A}(\tau)U(v,\tau)\Lambda$

$(\nu,\tau)\boldsymbol{U}^H(\nu,\tau)$. Since det $\boldsymbol{U}(\nu,\tau) = \det\overline{\boldsymbol{A}}(\tau) = 1$, in some examples, it can be found that the determinant of $\boldsymbol{A}(\tau)$ can be used as a response map since $\det\boldsymbol{A}(\nu,\tau) = \det\Lambda(\nu,\tau) = \lambda_f(\nu,\tau)\lambda_s(\nu,\tau)$. In some examples, the detuning of this determinant response $\lambda_f(\nu,\tau)\lambda_s(\nu,\tau)$ can be obtained as a sum of the detuning of the eigenvalues. In some examples, the common mode detuning of the fiber response (e.g., average of fast and slow axis detuning) may therefore be estimated as the detuning of the last measured determinant response map relative to a reference response map.

In some examples, it may be noted that $\boldsymbol{U}(\nu,\tau)$ may contain additional information about an orientation of the fast and slow axes, which, in some examples, may be extracted, e.g., to provide additional information about changes in the state of the optical fiber 1.

In the following, example aspects related to reference reflectors according to some examples based on the principle of the disclosure are provided.

In some examples, one or more, for example comparatively weak, e.g., localized, broadband reflectors (e.g., covering a complete sweeping bandwidth) comprising a comparatively low reflectivity may be provided in the optical fiber 1, that can act as constant delay reference(s) during the frequency scanning. This can for instance be flat-polished fiber connectors or fiber Bragg gratings (FBGs) with a small or well-known group delay dispersion.

In some examples, a tuning range of the optical source 12a may, e.g., comprise a frequency range of about 1 GHz, e.g., 10 GHz, e.g., 50 GHz, to about 100 GHz, for example about 60 GHz. In some examples, a frequency spacing between subsequent interrogation signals IS-1, IS-2, ... may, e.g., be about 7 MHz.

In some examples, the principle according to the embodiments may, e.g., be used for applications involving, e.g., requiring, long term static monitoring of the temperature and/or strain of the optical fiber 1, such as, e.g., but not limited to: a) monitoring temperature evolution in buried HVDC power transport and distribution cables, or b) temperature monitoring of oil and gas distribution pipes, or c) monitoring long term build-up of strain in telecom cables or other infrastructure, which may, e.g., indicate slowly evolving landslide tendencies around buried cables or buildup of seismic strain in earthquake areas or ground subsidence above oil and gas reservoirs and $CO_2$ storage sites, or d) monitoring of sea temperature, e.g., around sea cables, e.g., for climate monitoring.

Some examples, see Fig. 10, relate to a computer program PRG comprising instructions INSTR which, when executed by an apparatus 100, 100' (Fig. 2), cause the apparatus 100, 100' to perform the DAS method described above.

Some examples, see Fig. 10, relate to a computer-readable storage medium ST-M, for example a non-transitory computer-readable storage medium ST-M, comprising the computer program PRG according to the disclosure.

Some examples, see Fig. 10, relate to a data carrier signal DCS carrying and/or characterizing the computer program PRG according to the disclosure.

**Claims**

1. An apparatus (100) for distributed acoustic sensing, the apparatus (100) comprising a processor (102) and a memory (104) storing instructions (106) that, when executed by the at least one processor (102), cause the apparatus (100) to:

   perform (200) a plurality of distributed acoustic sensing, DAS, measurements (M-1, M-2, ...) by coupling a plurality (PL-IS) of optical interrogation signals (IS-1, IS-2, ...) into an optical waveguide (1) and receiving a plurality (PL-RS) of backscattered response signals (RS-1, RS-2, ...) from the optical waveguide (1) in response to the plurality of interrogation signals (IS-1, IS-2,...), the response signals (RS-1, RS-2, ...) having delay-resolved spectra comprising delay-resolved spectral features of the optical waveguide (1),
   wherein at least some of the delay-resolved spectral features are shifted in frequency, wherein at least two of the response signals (RS-1, RS-2) comprise a same part of the delay-resolved spectral features, and determine (202), based on the plurality of response signals (RS-1, RS-2, ...), an aggregated response (AR) of the optical waveguide (1).

2. The apparatus (100) according to claim 1, wherein the instructions (106), when executed by the at least one processor (102), cause the apparatus (100) to: apply (210) a periodic optical interrogation signal (IS) having a predetermined interrogation bandwidth and a predetermined interrogation period to the optical waveguide (1).

3. The apparatus (100) according to claim 2, wherein the instructions (106), when executed by the at least one processor (102), cause the apparatus (100) to perform at least one of: a) modifying (212) a center frequency of the periodic optical interrogation signal (IS) such that frequency spectra of the optical interrogation signal (IS) in subsequent interrogation periods overlap, or b) wait (214) for at least one environmental perturbation (EP) associated with the optical waveguide (1) to vary a frequency detuning of at least one backscattered response signal (RS-2), such that the spectra of the interrogation signal (IS) in subsequent interrogation periods overlap.

4. The apparatus (100) according to claim 2 or 3, wherein the instructions (106), when executed by the at least one processor (102), cause the apparatus (100) to: receive (216), for at least two interrogation periods, a respective backscattered response signal (RS-1, RS-2, ...).

5. The apparatus (100) according to any of the preceding claims, wherein the instructions (106), when executed by the at least one processor (102), cause the apparatus (100) to: determine (220) at least two complex impulse responses (CIR-1, CIR-2, ...) of the optical waveguide (1) based on at least two response signals (RS-1, RS-2, ...) of the plurality of response signals (RS-1, RS-2, ...), demodulate (222) the at least two complex impulse responses (CIR-1, CIR-2, ...) to obtain respective estimates (DET-EST-1, DET-EST-2, ...) for a delay-resolved detuning associated with the complex impulse responses (CIR-1, CIR-2, ...), determine (224) adjusted response signals (RSA-1, RSA-2, ...) based on the at least two response signals (RS-1, RS-2, ...) and based on the estimates (DET-EST-1, DET-EST-2, ...) for the delay-resolved detuning.

6. The apparatus (100) according to claim 5, wherein the instructions (106), when executed by the at least one processor (102), cause the apparatus (100) to: combine (226) the adjusted response signals (RSA-1, RSA-2, ...) to obtain the aggregated response (AR).

7. The apparatus (100) according to any of the preceding claims, wherein the instructions (106), when executed by the at least one processor (102), cause the apparatus (100) to: store (204; 228) the aggregated response (AR).

8. The apparatus (100) according to any of the preceding claims, wherein the instructions (106), when executed by the at least one processor (102), cause the apparatus (100) to: determine (230) a further aggregated response (AR') of the optical waveguide (1), compare (232) the further aggregated response (AR') of the optical waveguide (1) with the aggregated response (AR) of the optical waveguide (1).

9. The apparatus (100) according to any of the preceding claims, wherein the instructions (106), when executed by the at least one processor (102), cause the apparatus (100) to apply (240) to the optical waveguide (1) a sequence (SEQ-IS) of N many modulated optical interrogation signals $\exp(i2\pi\nu_k t)M(t)$, wherein $\nu_k$, k = 1 ... N characterizes a center frequency of a k-th modulated optical interrogation signal, wherein $M(t)$ is a pulse modulation function implementing a modulation pulse with a or the predetermined interrogation bandwidth SBW, by scanning the center frequency $\nu_k$ of the sequence (SEQ-IS) of the modulated optical interrogation signals over a predetermined scanning bandwidth BW, wherein $\nu_k - \nu_{k-1}$ < SBW.

10. The apparatus (100) according to claim 9, wherein the instructions (106), when executed by the at least one processor (102), cause the apparatus (100) to perform (242), for each of the N many modulated optical interrogation signals, at least one of the following aspects: a) receiving (242a) a backscattered interrogation signal $S_k(\tau)$, where $\tau$ characterizes a delay since a start of a transmitted modulation pulse, or b) applying (242b) a matched filter to the backscattered interrogation signal $S_k(\tau)$ to extract an estimate for a delay-resolved fiber response $h_k(\tau)$, or c) extracting (242c) a delay-resolved detuning $\Delta d_k(\tau)$ since an interrogation at a previous frequency $\nu_{k-1}$ based on a signal in the overlapping frequency bands of the backscattered interrogation signal $S_k(\tau)$ and a previous backscattered interrogation signal $S_{k-1}(\tau)$ using a DAS demodulation technique, wherein, for a first iteration, k=1, the delay-resolved detuning $\Delta d_1(\tau) = 0$, or d) determining (242d) an aggregated detuning since a start of the sequence as $d_k(\tau) = \sum_{n=1}^{k} \Delta d_k(\tau)$, or e) determining (242e) the delay-resolved fiber response $h_k(\tau)$ as an adjusted short-time Fourier transform, STFT, map $h'_k(\tau, d)$ with a time resolution $\delta\tau$ characterizing a sampling interval of the delay-resolved fiber response $h_k(\tau)$, where the delay-resolved fiber response $h_k(\tau)$ is shifted by $(\nu_k - \nu_0 + d_k(\tau))$ to represent a sample of the response at a start of the sequence relative to an optical reference frequency $\nu_0$, e.g., in accordance with

$$h'_k(\tau, d) = h_k(\tau) \cdot$$
$$\exp\left(i2\pi\left(\int_0^\tau d_k(t)\, dt + (\nu_k - \nu_0)\tau\right)\right) \cdot \text{interp}\left((\nu_k - \nu_0 + d_k(\tau) - d)\ \delta\tau\right)$$, wherein d characterizes a discrete detuning axis of the STFT map $h'_k(\tau, d)$, wherein interp(x) characterizes an interpolation function.

11. The apparatus (100) according to claim 10, wherein the instructions (106), when executed by the at least one processor (102), cause the apparatus (100) to determine (244) an aggregated STFT map $h(\tau, d)$ by combining the adjusted STFT maps $h'_k(\tau, d)$ using a weighted averaging procedure, e.g. in accordance with

$$h(\tau, d) = \frac{\sum_{k=1}^{N} h'_k(\tau, d) \, W_k(d)}{\sum_{k=1}^{N} W_k^2(d)}$$ , where $W_k(d) = A(d) \cdot \text{interp}((v_k - v_0 + d_k(\tau) - d) \, \delta\tau)$, wherein $A(d)$ characterizes a power spectral density of the pulse modulation function $M(t)$.

12. The apparatus (100) according to any of the preceding claims, wherein performing (200) the plurality of DAS measurements (M-1, M-2, ...) comprises applying (200a) the plurality of optical interrogation signals (IS-1, IS-2, ...) at two different polarizations and receiving (200b) the plurality of backscattered response signals (RS-1, RS-2, ...) at another two different polarizations.

13. An apparatus (100') for distributed acoustic sensing, the apparatus (100') comprising means for: performing (200) a plurality of distributed acoustic sensing, DAS, measurements (M-1, M-2, ...) by applying a plurality of optical interrogation signals (IS-1, IS-2, ...) to an optical waveguide (1) and receiving a respective plurality of backscattered response signals (RS-1, RS-2, ...) from the optical waveguide (1) in response to the plurality of interrogation signals (IS-1, IS-2, ...), the response signals (RS-1, RS-2, ...) having delay-resolved spectra comprising delay-resolved spectral features of the optical waveguide (1), wherein at least some of the delay-resolved spectral features are shifted in frequency, wherein at least two of the response signals comprise a same part of the delay-resolved spectral features, determining (202), based on the plurality of response signals (RS-1, RS-2, ...), an aggregated response (AR) of the optical waveguide (1).

14. The apparatus (100; 100') according to any of the preceding claims, wherein the aggregated response (AR) has at least one of a) a higher spatial resolution than the, for example individual, response signals (RS-1, RS-2, ...), or b) a larger bandwidth than the, for example individual, response signals (RS-1, RS-2, ...).

15. A method for distributed acoustic sensing, the method comprising: performing (200) a plurality of distributed acoustic sensing, DAS, measurements (M-1, M-2, ...) by applying a plurality of optical interrogation signals (IS-1, IS-2, ...) to an optical waveguide (1) and receiving a respective plurality of backscattered response signals (RS-1, RS-2, ...) from the optical waveguide (1) in response to the plurality of interrogation signals (IS-1, IS-2,...), the response signals (RS-1, RS-2, ...) having delay-resolved spectra comprising delay-resolved spectral features of the optical waveguide (1), wherein at least some of the delay-resolved spectral features are shifted in frequency, wherein at least two of the response signals comprise a same part of the delay-resolved spectral features, determining (202), based on the plurality of response signals (RS-1, RS-2, ...), an aggregated response (AR) of the optical waveguide (1).

# Fig. 1A

100

102

104

106

# Fig. 1B

100'

102'

104'

# Fig. 2

10

100

12a, 12b

100'

AR

AR'

1a

IS, PL-IS

1

IS-1

IS-2

RS-1

RS-2

PL-RS

EP

1b

M-1

M-2

PL-M

# Fig. 3

200,
200a,
200b

PERFORM PLURALITY OF DISTRIBUTED ACOUSTIC SENSING
MEASUREMENTS BY APPLYING PLURALITY OF INTERROGATION
SIGNALS TO OPTICAL FIBER

IS-1, IS-2, ...

202

DETERMINE AGGREGATED RESPONSE OF OPTICAL FIBER BASED ON
PLURALITY OF RESPONSE SIGNALS

AR

204

STORE AGGREGATED RESPONSE

AR

# Fig. 4

210

APPLY PERIODIC OPTICAL INTERROGATION SIGNAL HAVING
PREDETERMINED INTERROGATION BANDWIDTH AND
PREDETERMINED INTERROGATION PERIOD TO OPTICAL FIBER

IS

212

MODIFY CENTER FREQUENCY OF INTERROGATION SIGNAL SUCH
THAT FREQUENCY SPECTRA OF INTERROGATION SIGNAL IN
SUBSEQUENT INTERROGATION PERIODS OVERLAP

214

WAIT FOR PERTURBATION OF OPTICAL FIBER TO VARY FREQUENCY
DETUNING OF AT LEAST ONE BACKSCATTERED RESPONSE SIGNAL
SUCH THAT FREQUENCY SPECTRA OF INTERROGATION SIGNAL IN
SUBSEQUENT INTERROGATION PERIODS OVERLAP

216

RECEIVE, FOR AT LEAST TWO INTERROGATION PERIODS,
RESPECTIVE BACKSCATTERED RESPONSE SIGNAL CHARACTERIZING
COMPLEX IMPULSE RESPONSE OF OPTICAL FIBER

RS-1, RS-2, ...

## Fig. 5

**220** — DETERMINE COMPLEX IMPULSE RESPONSES OF OPTICAL FIBER BASED ON RESPONSE SIGNALS

↓ CIR-1, CIR-2, ...

**222** — DEMODULATE AT LEAST TWO COMPLEX IMPULSE RESPONSES TO OBTAIN ESTIMATES FOR DELAY RESOLVED DETUNING

↓ DET-EST-1, DET-EST-2, ...

**224** — DETERMINE ADJUSTED RESPONSE SIGNALS BASED ON RESPONSE SIGNALS AND ESTIMATES FOR DELAY RESOLVED DETUNING

↓ RSA-1, RSA-2, ...

**226** — COMBINE ADJUSTED RESPONSE SIGNALS TO OBTAIN AGGREGATED RESPONSE

↓ AR

**228** — STORE AGGREGATED RESPONSE

↓ AR

## Fig. 6

**230** — DETERMINE FURTHER AGGREGATED RESPONSE OF OPTICAL FIBER

↓ AR'

**232** — COMPARE FURTHER AGGREGATED RESPONSE OF OPTICAL FIBER WITH AGGREGATED RESPONSE OF OPTICAL FIBER

↓ COMP-AR

# Fig. 7

240 — APPLY SEQUENCE OF MODULATED OPTICAL INTERROGATION SIGNALS

$\downarrow$ SEQ-IS

242 — RECEIVE AND PROCESS BACKSCATTERED INTERROGATION SIGNAL TO DETERMINE ADJUSTED STFT MAPS

$\downarrow h'_k(\tau, d)$

244 — DETERMINE AGGREGATED STFT MAP BY COMBINING ADJUSTED STFT MAPS

$\downarrow h(\tau, d)$

# Fig. 8

242a — RECEIVE BACKSCATTERED INTERROGATION SIGNAL

$S_k(\tau)$

242b — APPLY MATCHED FILTER TO BACKSCATTERED INTERROGATION SIGNAL

$h_k(\tau)$

242c — EXTRACT DELAY RESOLVED DETUNING

$\Delta d_k(\tau)$

242d — DETERMINE AGGREGATED DETUNING

$$d_k(\tau) = \sum_{n=1}^{k} \Delta d_k(\tau)$$

242e — DETERMINE DELAY RESOLVED FIBER RESPONSE AS ADJUSTED SHORT-TIME FOURIER TRANSFORM, STFT, MAP

$h_k(\tau), h'_k(\tau, d)$

# Fig. 9

# Fig. 10

Europäisches
Patentamt

European
Patent Office

Office européen
des brevets

# EUROPEAN SEARCH REPORT

**Application Number**

EP 25 31 5032

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/297883 A1 (KUPERSHMIDT VLADIMIR [US]) 29 November 2012 (2012-11-29) | 1-4, 7-10, 13-15 | INV. G01H9/00 |
| A | * abstract; claim 1; figure 4 * <br> * paragraphs [0037], [0064], [0070], [0073], [0078], [0079] * | 11 | |
| X | CN 118 882 710 A (NANJING UNIVERSITY) 1 November 2024 (2024-11-01) | 1-4,7,8, 12-15 | |
| Y | * abstract; claims 1,4; figures 1,2 * | 5,6 | |
| A | * paragraph [0103] * | 11 | |
| Y | US 2020/408572 A1 (RONNEKLEIV ERLEND [NO] ET AL) 31 December 2020 (2020-12-31) | 5,6 | |
| A | * abstract; claims 1,6; figures 5,7 * <br> * paragraphs [0019], [0103] * | 11 | |

**TECHNICAL FIELDS SEARCHED (IPC)**

G01H

The present search report has been drawn up for all claims

| Place of search | Date of completion of the search | Examiner |
|---|---|---|
| The Hague | 9 July 2025 | Fernandes, Paulo |

## ANNEX TO THE EUROPEAN SEARCH REPORT
## ON EUROPEAN PATENT APPLICATION NO.

EP 25 31 5032

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2025

| Patent document cited in search report | Publication date | Patent family member(s) | | Publication date |
|---|---|---|---|---|
| US 2012297883 A1 | 29-11-2012 | US | 2012297883 A1 | 29-11-2012 |
| | | WO | 2012068558 A1 | 24-05-2012 |
| CN 118882710 A | 01-11-2024 | NONE | | |
| US 2020408572 A1 | 31-12-2020 | CN | 112146689 A | 29-12-2020 |
| | | EP | 3757522 A1 | 30-12-2020 |
| | | US | 2020408572 A1 | 31-12-2020 |
| | | US | 2024159574 A1 | 16-05-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WAAGAARD, OLE HENRIK et al.** Real-time low noise distributed acoustic sensing in 171 km low loss fiber... *OSA continuum*, 2021, vol. 4 (2), 688-701